Europäisches Patentamt

European Patent Office

Office européen des brevets

(11) Publication number: **0 308 202 B1**

## EUROPEAN PATENT SPECIFICATION

(45) Date of publication of patent specification: **27.07.94**   (51) Int. Cl.⁵: **D04G  1/00**, D03J 1/00, D03J 1/06

(21) Application number: **88308504.5**

(22) Date of filing: **14.09.88**

(30) Priority: **14.09.87 JP 230759/87**
**31.05.88 JP 133816/88**

(43) Date of publication of application:
**22.03.89 Bulletin  89/12**

(45) Publication of the grant of the patent:
**27.07.94 Bulletin  94/30**

(84) Designated Contracting States:
**DE FR GB IT**

(56) References cited:
**AT-B- 365 673        CH-A- 530 496**
**FR-A- 2 065 906      FR-A- 2 439 253**
**GB-A- 770 678        GB-A- 1 237 308**

(73) Proprietor: **DIATEX CO., LTD.**
**8-6, Kaji-cho 3-chome**
**Kanda**
**Chiyoda-ku**
**Tokyo(JP)**

(72) Inventor: **Fukushima, Takashi**
**c/o Diatex Co., Ltd.**
**8-6, Kaji-cho 3-chome**
**Kanda Chiyoda-ku Tokyo(JP)**
Inventor: **Okamoto, Kozo**

c/o, Tokuden Co., Ltd.
40, Nishinorikyu-cho
Yamashina-ku Kyoto-shi Kyoto-fu(JP)
Inventor: **Noto, Masao**
c/o Diatex Co., Ltd.
8-6, Kaji-cho 3-chome
Kanda Chiyoda-ku Tokyo(JP)
Inventor: **Hirota, Shigeyuki**
c/o, Tokuden Co., Ltd.
40, Nishinorikyu-cho
Kyoto-shi Yamashina-ku Kyoto-fu(JP)

(74) Representative: **Abnett, Richard Charles et al**
**REDDIE & GROSE**
**16 Theobalds Road**
**London WC1X 8PL (GB)**

**(54) Net sheet making apparatus.**

EP 0 308 202 B1

**Description**

The present invention relates to apparatus for making a net sheet by fusion bonding fusible warp and weft threads together, said apparatus comprising weaving means for weaving the weft threads into the warp threads, a heating device for fusing the threads together, and means for winding up the net sheet.

An apparatus of this kind is disclosed in U.K. Patent Specification No. GB-A-770678. In that specification loom tension is used to hold the meshes in position while the weft and warp threads are fused together. The heating must be done carefully to avoid causing undesirable flow of the yarns or coalescence of the filaments in the yarns.

The present invention is characterized in that the heating means comprise a roller of the induction heating type with a jacket chamber containing a two-phase heat medium to improve the uniformity of surface temperature by repeating a cycle consisting of evaporation and condensation and forward and rearward tensioning rollers are arranged to wind the woven strip around the heating roller under a predetermined tension.

A heating roller of the type in question is disclosed in U.K. Patent Specification No. GB-A-1237308.

In a net sheet there are gaps at least between the warp threads or weft threads. After the formation of the net the positional relationship between the threads may be disturbed before they are fused so that the desired gaps are not maintained. The invention avoids this difficulty.

The use as a fusing device of a heating roller of the induction heating type with a two-phase heat medium allows a simplified and small-sized construction which can easily be controlled in temperature to maintain the entire heating part thereof at a uniform temperature, said fusing device being capable of fusion bonding the warp and weft yarns efficiently and positively.

When the net sheet is rolled, it must not be handled in the same manner as in the conventional woven textiles since when the net sheet is rolled with the warp threads thereof superposed one on another, the roll configuration may collapse from a larger external diameter with the warp threads in a winding layer falling into gaps between the warp threads in the adjacent winding layer. In the latter case, further, the roll configuration may be disturbed to form an undesirable roll shape.

In one preferred embodiment of the present invention, said winding-up means is axially oscillatable by engagement of the end inclined face of a wind-up core member with the sloping faces of wind-up sidewall portions. The winding-up means is further adapted to axially rock by the wind-up core member upwardly moving between corrugated members which extend vertically between the wind-up sidewall portions.

In the preferred embodiment, the warp and weft threads can be fused together while maintaining their netted state, so that desirable gaps can easily be formed between the warp threads and between the weft threads. The fusing means is of a simplified and small-sized construction including its heating portion which can be controlled into a uniform temperature to perform the desirable and positive fusion bonding operation. Since the winding-up means is axially oscillatable, there can be provided a net sheet having a stable structure without skew.

BRIEF DESCRIPTION OF THE DRAWINGS

Figure 1 is a schematic layout of one embodiment of a net sheet making apparatus constructed in accordance with the present invention.

Figure 2 is a perspective view, partially broken away, of an induction heating roller usable in the present invention.

Figure 3 is a plan view of a wind-up section in the apparatus of the present invention.

DETAILED DESCRIPTION OF THE PREFERRED EMBODIMENTS

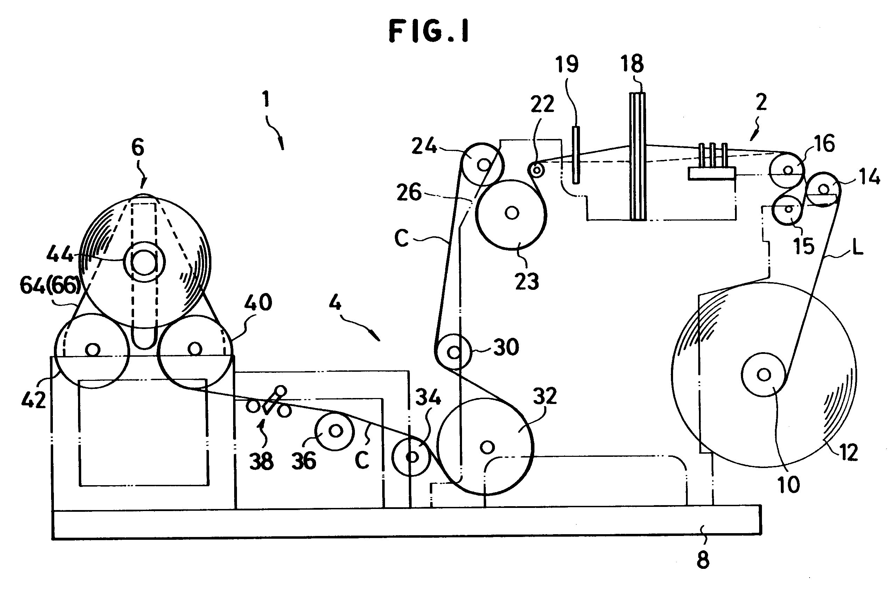

Referring first to Figure 1, there is shown a net sheet making apparatus 1 which comprises a weaving section 2, a fusing section 4 and a wind-up section 6, all the sections being substantially integrally installed on a base 8.

The weaving section 2 rotatably supports a warp yarn roll 12 which includes a cylindrical shaft 10 and a plurality of juxtaposed warp threads wound around the shaft 10 without axial gap. The warp yarn roll 12 is adapted to receive a given resistance against rotation.

Guide rollers 14, 15 and 16 are disposed above the warp yarn roll 12 to form a path for guiding the warp yarn strip L drawn out of the warp yarn roll 12. A heald 18 and reed 19 are disposed in front of the guide roller 16 (leftward as viewed in Figure 1). The heald 18 is adapted to weave weft threads into between each adjacent warp threads in the warp yarn strip L. The reed 19 is adapted to arrange the warp threads

2

regularly and to urge the woven weft threads into predetermined position.

In front of the reed 19 are disposed a woven strip taking-up roller set 26 which comprises a guide roller 22 and pressure rollers 23, 24 and is adapted to take up a woven strip C formed by the heald 18.

The fusing section 4 disposed downstream of the weaving section 2 comprises a forward tensioning roller 30, an induction heating roller 32, a rearward tensioning roller 34, a guide roller 36 and a heat cutting device 38, which components are disposed along the direction of movement of the woven strip C in the order as described. The forward and rearward tensioning rollers 30 and 34 are adapted to wind the woven strip C around the induction heating roller 32 through a range of about 180° under a predetermined tension.

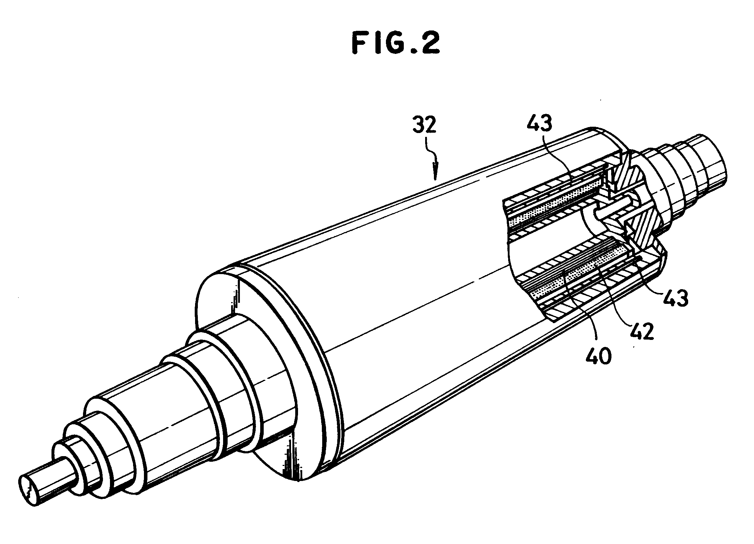

As seen from Figure 2, the induction heating roller 32 comprises a central iron core 40, an induction coil 42 wound around the core 40 and an outside jacket chamber 43 located around the induction coil 42. When the induction coil 42 is energized a shortcircuiting current is induced circumferentially in the material of the induction roller so that the entire induction heating roller 32 is self-heated.

The jacket chamber 43 is an enclosed chamber filled with a mixture consisting of two-phase heat medium, that is, water and steam. The jacket chamber 43 thus acts to maintain the surface temperature in the roller 32 at a uniform temperature by repeating a cycle consisting of evaporation and condensation. The induction heating roller 32 is adapted to urge and fuse the warp and weft threads in the woven strip C against each other while maintaining the surface temperature, for example, at a range of (100°C-160°C) without change beyond 50°C.

Each of the warp and weft threads includes a composite tape material which is composed of an oriented tape core material of thermoplastic resin (high-melting thermoplastic resin) and coating layers of thermoplastic resin having its melting point lower than that of the tape core material (low-melting thermoplastic resin) on the opposite faces of the tape core.

Such thermoplastic resins include high-density polyethylene, low-density polyethylene, middle-density polyethylene, polypropylene, polyvinyl chloride, polyvinylidene chloride, polystyrene, polyvinyl alcohol, polyacrylonitrile, polyamide, polyester and so on.

The melting point in the low-melting thermoplastic resin should be at a level such that the orientation of the tape core material will not be influenced by the low-melting temperature. If the tape core material is subjected to a temperature higher than such a low-melting temperature, it would be reduced in strength, leading that the entire net sheet will be reduced in strength. In general, the melting point of the low-melting thermoplastic resin is 15°C-35°C and preferably 20°C-30°C lower than the high-melting point of the high-melting thermoplastic resin. The oriented tape core material is preferably made of high-density polyethylene or polypropylene while the coating layers are preferably formed of low-density polyethylene,. Further, the warp and weft threads may be made of different composite tape materials, respectively.

Such composite tape materials can be prepared in accordance with any suitable well-known manner. For example, the surface coating layers of low-melting thermoplastic resin may be bonded by fusion or adhesive on the opposite faces of the oriented tape core material. After the thermoplastic coating layer material have been adhered to the opposite faces of the thermoplastic tape core material, the resulting tape core may be slitted into a predetermined width and one-way drawn. Alternatively, the resulting tape core may be one-way drawn and then slitted into a predetermined width. Preferably, a low-melting thermoplastic resin material is fused to the opposite faces of a thermoplastic tape-like material in a composite die machine which utilizes two extruders. The fused materials are then extruded into a laminated film which in turn is drawn.

The rate of drawing is ranged between 4 and 12 and preferably between 5 and 8.

The width of the composite tape material is not particularly limited and may be freely designed so that various net patterns can be selected depending on the applications of the net sheet. However, the fineness of the composite tape material is generally ranged between $2.22 \times 10^{-5}$ kg/m and $33.33 \times 10^{-5}$ kg/m (200 deniers and 3000 deniers).

The cutting device 38, which may be heating or blade means, is adapted to trim the opposite side edges of the composite fused strip, that is, the net sheet C.

The wind-up section 6 comprises a pair of clockwise rotating wind-up rollers 40 and 42 and a wind-up core member 44 placed on the wind-up rollers. The wind-up core member 44 includes a shaft having the opposite ends 46 and 49 which extends axially outwardly beyond the opposite ends of the core member 44. One of the shaft ends 46 has an end face 52 inclined relative to the axis 50, that is, positioned relative to the axis with an angle other than 90 degrees. The inclined end face 52 of the shaft end 46 is engaged by abutting member 56 similarly having a sloping face 54 inclined relative to the axis 50. The shaft end 48 is received in a spring receiving member 60 through a compression spring 62. The abutting member 56 is fixedly mounted on a wind-up sidewall 64 while the spring receiving member 60 is slidably fitted into a vertically extending groove 70 which is formed in the other wind-up sidewall 66.

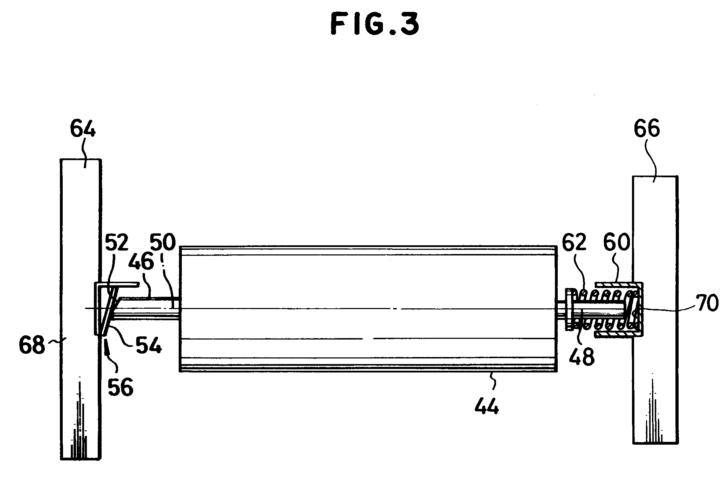

In the winding-up section 6, the leading end of the net sheet C is first mounted on the wind-up core member 44. Thereafter, the wind-up core member 44 is placed on the wind-up rollers 40 and 42. As the wind-up core member 44 is being rotated by means of the wind-up rollers 40 and 42, the net sheet C is wound around the core member 44 to progressively increase the external diameter of the rolled net sheet. As the external diameter of the rolled net sheet increases, the wind-up core member 44 is lifted while oscillating axially or leftwardly and rightwardly as viewed in Figure 3 by the engagement of the inclined end face 52 of the rotating shaft end 46 with the sloping face 54 of the abutting member 56 and also under the action of the compression spring 62. Due to such an axial oscillation of the core member 44, it can be avoided that the net sheet will be formed into an unstable roll having a hugely increased diameter from the warp threads thereof being superposed one on another in the rolled structure or that the net sheet will be rolled with skew only in one direction. In accordance with the present invention, the warp threads on one winding layer in the rolled net sheet can be fallen into between the warp threads on the adjacent winding layer to form a stable net sheet roll.

In another preferred embodiment of the present invention, the wind-up core member 44 may be arranged with its opposite ends engaged by corrugated faces which are formed on the opposed surfaces of the wind-up sidewalls 64 and 66 in the vertical direction. Similarly, the core member 44 can be axially oscillated between the sidewalls as the core member 44 moves vertically along the sidewalls.

Although the above embodiments have been described as to the axial oscillation of the wind-up core member 44, the present invention is not limited to such an arrangement. Namely, the present invention can make various net sheets shown in the following table.

Table

| Product Number | Warp | | Weft | | Warp Weaving Pitch | Warp Width | Warp Covering Rate | Gap Between Warp Threads | Gap Rate |
|---|---|---|---|---|---|---|---|---|---|
| | Number of Warps per One Inch (25.4mm) | Size | Number of Wefts per One Inch (25.4mm) | Size | mm | mm | % | mm | % |
| C1 | 3.5 | 680 | 2.8 | 340 | 7.257 | 1.1 | 15.2 | 6.157 | 84.8 |
| C2 | 5 | 340 | 5 | 340 | 5.08 | 1.1 | 21.7 | 3.98 | 73.8 |
| C3 | 3 | 1350 | 4 | 650 | 8.467 | 2.0 | 23.6 | 6.467 | 76.4 |
| C4 | 7 | 340 | 7 | 340 | 3.629 | 1.1 | 30.1 | 2.529 | 69.9 |
| C5 | 8 | 340 | 8 | 340 | 3.175 | 1.1 | 34.6 | 2.075 | 65.4 |
| C6 | 6 | 300 | 6 | 300 | 4.237 | 1.6 | 37.8 | 2.633 | 62.2 |
| C7 | 9.5 | 250 | 9.5 | 250 | 2.674 | 1.25 | 46.7 | 1.424 | 53.3 |
| C8 | 12 | 750 | 12 | 750 | 2.117 | 1.0 | 48.0 | 1.117 | 52.0 |
| C9 | 7 | 300 | 7 | 300 | 3.629 | 1.8 | 49.6 | 1.829 | 50.9 |
| C10 | 13 | 850 | 13 | 750 | 1.954 | 1.0 | 51.2 | 0.954 | 48.8 |
| C11 | 12 | 220 | 12 | 220 | 2.117 | 1.1 | 52.0 | 1.017 | 48.0 |
| C12 | 7 | 650 | 7 | 650 | 3.629 | 2.0 | 55.1 | 1.629 | 44.9 |
| C13 | 9 | 350 | 9 | 350 | 2.822 | 1.6 | 56.7 | 1.222 | 43.3 |
| C14 | 7.5 | 1350 | 7 | 1350 | 3.387 | 2.0 | 59.0 | 1.387 | 41.0 |
| C15 | 9 | 400 | 9 | 400 | 2.822 | 1.8 | 63.8 | 1.022 | 36.2 |
| C16 | 9 | 1200 | 9 | 1200 | 2.822 | 1.8 | 63.8 | 1.022 | 36.2 |
| C17 | 10 | 300 | 10 | 300 | 2.540 | 1.8 | 70.1 | 0.74 | 29.1 |
| C18 | 6 | 1000 | 6 | 1000 | 4.233 | 3.0 | 70.9 | 1.233 | 29.1 |
| C19 | 8 | 800 | 8 | 800 | 3.175 | 2.8 | 88.2 | 0.375 | 11.8 |

In the table, the warp covering rate is a percentage of the weaving pitch relative to the warp width and the warp gap rate is a percentage of the weaving rate relative to the warp gap.

It can be understood from the table that the products C1 through C8 can be rolled very well under the axial oscillation ranged between 4 mm and 8 mm; that the products C7 through C18 can be rolled very well under the axial oscillation ranged between 2 mm and 4 mm; and that the products C14 through C19 can be rolled, without any axial oscillation, into a stable net sheet roll having no skew in one direction.

When each of the products C1 through C13 was to be rolled with an axial oscillation less than said values or without any axial oscillation, the net sheet was rolled with its corrugated intermediate region wit the opposite end faces thereof being recessed. When such a rolled net sheet was unwound, the corrugated intermediate region of the net sheet did not disappear. As a result, the width of the net sheet was decreased from the desired width. If such a net sheet is subjected to laminating, sewing and other workings, a net product lacking in width would be produced. It is of course that when the net sheet roll itself is to be sold as a final product, the recessed end faces of the net sheet roll will degrade its commercial quality. If the corrugated intermediate region of the rolled net sheet is increased in degree, the reduction of width and the degradation of commercial quality will further be emphasized.

Moreover, the net sheet roll produced without any axial oscillation tends to be reduced in strength. If such net sheet rolls are stored under the side-by-side superposed condition, the circular cross-section of each of the rolls will be damaged into any undesirable deformed cross-section other than circle. As a result, when the deformed net sheet roll is to be unwound while braking the rotating net sheet roll, the braking is not efficiently performed. This means that a high-quality net sheet product cannot be provided.

The invention has thus been shown and described with reference to specific embodiments, however, it should be noted that the invention is in no way limited to the details of the illustrated structures but changes and modifications may be made without departing from the scope of the appended claims.

## Claims

1. An apparatus for making a net sheet by fusion bonding fusible warp and weft threads together, said apparatus comprising weaving means (2) for weaving the weft threads into the warp threads, a heating device (32) for fusing the threads together, and means (6) for winding up the net sheet (C) characterized in that the heating means comprise a roller (32) of the induction heating type with a jacket chamber (43) containing a two-phase heat medium to improve the uniformity of surface temperature by repeating a cycle consisting of evaporation and condensation and forward and rearward tensioning rollers (30, 34) are arranged to wind the woven strip around the heating roller (32) under a predetermined tension.

2. An apparatus as claimed in claim 1 characterized in that the winding means is so constructed that the roll of net sheet is oscillated axially as the net sheet is wound up.

3. An apparatus as defined in claim 1, wherein said winding means is axially oscillated by engagement of the inclined end face (52) of a wind-up core member (44) with the sloping face (54) of a wind-up sidewall (64).

4. An apparatus as defined in claim 1, wherein said winding means includes a wind-up core member (44) adapted to axially oscillate while upwardly moving between vertically extending and corrugated members on the opposed wind-up sidewalls (64, 66).

## Patentansprüche

1. Vorrichtung zum Herstellen einer Netzfolie durch Schmelzverbinden von schmelzbaren Kett- und Schussfäden, welche Vorrichtung aufweist eine Webeinrichtung (2) zum Einweben der Schussfäden in die Kettfäden, eine Heizeinrichtung (32) zum Verschmelzen der Fäden und eine Einrichtung (6) zum Aufwickeln der Netzfolie (C), dadurch gekennzeichnet, dass die Heizeinrichtung eine Induktionsheizwalze (32) mit einer ein Zweiphasen-Heizmedium enthaltenden Mantelkammer (43) umfasst, um die Gleichförmigkeit der Oberflächentemperatur durch einen wiederholten Zyklus, bestehend aus Verdampfen und Kondensieren, zu verbessern, und dass vordere und hintere Spannwalzen (30,34) so angeordnet sind, dass der gewebte Streifen um die Heizwalze (32) unter einer bestimmten Spannung herumgeführt wird.

2. Vorrichtung nach Anspruch 1, dadurch gekennzeichnet, dass die Aufwickeleinrichtung so ausgebildet ist, dass die Netzfolienrolle beim Aufwickeln der Netzfolie axial hin- und herbewegt wird.

3. Vorrichtung nach Anspruch 1, dadurch gekennzeichnet, dass die Aufwickeleinrichtung durch Eingriffnahme der abgeschrägten Stirnfläche (52) eines Aufwickelkernelementes (44) mit der Schrägfläche (54)

6

einer Aufwickelseitenwand (64) axial hin- und herbewegbar ist.

4. Vorrichtung nach Anspruch 1, dadurch gekennzeichnet, dass die Aufwickeleinrichtung ein Aufwickelkernelement (44) aufweist, das axial hin- und herbewegbar ist, während es zwischen vertikal sich erstreckenden gewellten Elementen an den gegenüberliegenden Aufwickelseitenwänden (64,66) aufwärts bewegbar ist.

**Revendications**

1. Appareil de fabrication d'une feuille constituant un filet, par liaison par fusion de fils fusibles de chaîne et de trame, l'appareil comprenant un dispositif (2) de tissage des fils de trame dans les fils de chaîne, un dispositif (32) de chauffage destiné à associer les fils par fusion, et un dispositif (6) d'enroulement de la feuille (C) constituant le filet, caractérisé en ce que le dispositif de chauffage comprend un rouleau (32) du type à chauffage par induction ayant une chambre (43) délimitant une double enveloppe contenant un fluide thermique à deux phases, améliorant l'uniformité de la température de surface par répétition d'un cycle comprenant l'évaporation et la condensation, et des rouleaux (30, 34) de mise sous tension avant et arrière sont disposés afin qu'ils enroulent la bande tissée autour du rouleau de chauffage (32) avec une tension prédéterminée.

2. Appareil selon la revendication 1, caractérisé en ce que le dispositif d'enroulement a une construction telle que le rouleau formé par la feuille constituant le filet oscille axialement lorsque la feuille est enroulée.

3. Appareil selon la revendication 1, dans lequel le dispositif d'enroulement oscille axialement par mise en coopération de la face inclinée (52) d'extrémité d'un organe (44) d'âme d'enroulement avec la face inclinée (54) d'une paroi latérale d'enroulement (64).

4. Appareil selon la revendication 1, dans lequel le dispositif d'enroulement comprend un organe d'âme d'enroulement (44) destiné à osciller axialement avec déplacement vers le haut entre des organes ondulés disposés verticalement sur les parois latérales opposées d'enroulement (64, 66).

# FIG.I

EP 0 308 202 B1

FIG.2

# FIG.3